(19) **Europäisches Patentamt**
European Patent Office
Office européen des brevets

(11) **EP 2 155 797 B1**

(12) **EUROPÄISCHE PATENTSCHRIFT**

(45) Veröffentlichungstag und Bekanntmachung des Hinweises auf die Patenterteilung:
**30.11.2011 Patentblatt 2011/48**

(51) Int Cl.:
***C08G 18/10*** *(2006.01)*   ***C08G 18/48*** *(2006.01)*
***C08G 18/76*** *(2006.01)*

(21) Anmeldenummer: **08758647.5**

(22) Anmeldetag: **21.05.2008**

(86) Internationale Anmeldenummer:
**PCT/EP2008/004039**

(87) Internationale Veröffentlichungsnummer:
**WO 2008/145280 (04.12.2008 Gazette 2008/49)**

(54) **NCO-PREPOLYMERE MIT NIEDRIGEM GEHALT AN FREIEM MONOMEREM DIISOCYANAT UND IHRE HERSTELLUNG**

NCO PREPOLYMERS WITH A LOW FREE MONOMERIC DIISOCYANATE CONTENT AND PRODUCTION THEREOF

PRÉPOLYMÈRES NCO À FAIBLE TENEUR EN DIISOCYANATE MONOMÈRE LIBRE ET LEUR PRODUCTION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **01.06.2007 DE 102007025659**

(43) Veröffentlichungstag der Anmeldung:
**24.02.2010 Patentblatt 2010/08**

(73) Patentinhaber: **Bayer MaterialScience AG**
**51368 Leverkusen (DE)**

(72) Erfinder:
• **NEFZGER, Hartmut**
**50259 Pulheim (DE)**
• **BARNES, James-Michael**
**53547 Breitscheid (DE)**
• **MAYER, Eduard**
**41539 Dormagen (DE)**
• **WAGNER, Joachim**
**51061 Köln (DE)**

(56) Entgegenhaltungen:
**DE-A1- 4 140 660       US-A- 5 925 781
US-A1- 2003 212 236**

**Beschreibung**

Die vorliegende Erfindung betrifft NCO-Prepolymere mit niedrigem Gehalt an freiem monomerem Diisocyanat, ihre Herstellung und die Verwendung der einstufig hergestellten NCO-Prepolymere.

Polyurethanelastomere sind seit langem bekannt. Einer der möglichen Herstellungswege beinhaltet die Syntheseroute über NCO-Prepolymere, die in einer Kettenverlängerungsreaktion mit kurzkettigem Diol oder kurzkettigem Diamin zum Endprodukt umgesetzt werden. Die Kettenverlängerungsreaktion wird, was die Stöchiometrie betrifft, so ausgeführt, dass zumindest näherungsweise Äquivalenz von Isocyanatgruppen einerseits und Hydroxyl- bzw. Aminogruppen andererseits gewährleistet ist. Hierdurch wird der Aufbau eines hohen Molekulargewichtes ermöglicht.

Die NCO-Prepolymere werden erhalten, indem man ein langkettiges Polyol, in vielen Fällen ein langkettiges Diol, sei es ein Polyether- oder ein Polyesterdiol, mit Polyisocyanaten, in der Regel meist Diisocyanate, umsetzt. Bei der Synthese der NCO-Prepolymere wird, um den Aufbau hoher Molekulargewichte zu verhindern, die zu nicht handhabbaren Viskositäten der Prepolymere führen würden, stark von der 1:1-Stöchiometrie abgewichen, beispielsweise wird ein molarer 2:1-Überschuss eines Diisocyanats mit einem langkettigen Diol gewählt. Hierdurch wird sowohl gewährleistet, dass nicht alle NCO-Gruppen abreagieren können und für die spätere Kettenverlängerungsreaktton zur Verfügung stehen, als auch, dass der Aufbau des Molekulargewichts begrenzt bleibt und Systeme mit noch handhabbarer Viskosität entstehen.

Beim Einsatz bifunktioneller Isocyanate und bifunktioneller langkettiger Polyole kommt es jedoch auch beim Einsatz einer 2:1-Stöchiometrie nur im statistischen Mittel zur Bildung eines 2:1-Adduktes. Die aufgrund von statistischen Überlegungen leicht nachvollziehbare Realität zeigt jedoch ein weit kompliziertes Bild: Reagiert ein Diisocyanatmolekül nicht nur mit einer seiner beiden NCO-Gruppen, sondern mit beiden, kommt es zur sogenannten Vorverlängerung, d.h. anstelle eines 2:1-Adduktes entsteht hierdurch ein 3:2-Addukt, welches ebenfalls 2 NCO-Endgruppen aufweist, also einer späteren Kettenverlängerungsreaktion ebenso zugänglich ist, wie ein 2:1-Addukt. Aufgrund der vorgegebenen Gesamtstöchiometrie von 2:1 bedeutet jede Vorverlängerungsreaktion jedoch auch, dass ein nicht umgesetztes Diisocyanatmolekül mangels Reaktionspartner im Reaktionsgemisch übrig bleiben muss. Man spricht hier von freiem monomerem Diisocyanat.

Selbstverständlich können auch 3:2-Addukte noch weiter vorverlängert werden, etwa unter Bildung von 4:3-, 5:4-Addukten usw., wobei auch hier weitere freie monomere Diisocyanate die Bei Diisocyanaten mit exakt gleich reaktiven NCO-Gruppen kann der Gehalt an freiem monomeren Diisocyanat mit Hilfe der Schulz-Flory-Statistik berechnet werden. Die Wahrscheinlichkeit (W), dass ein Diisocyanatmolekül <u>nicht</u> zur Reaktion gelangt, also als freies monomeres Diisocyanatmolekül übrig bleibt, ergibt sich aus der Formel (I)

$$W = (1-p)^2 \qquad\qquad (I),$$

wobei p den Anteil an reagierten NCO-Gruppen, (1-p) demzufolge den Anteil an nicht reagierten NCO-Gruppen bedeutet und sich letztlich direkt aus der Stöchiometrie ergibt. Im Falle von rein bifunktionellen Komponenten können z.B. bei einer 2:1-Stöchiometrie nur 50% aller NCO-Gruppen überhaupt zur Reaktion gelangen, so dass p ebenso wie (1-p) den Wert 0,5 annimmt und W dementsprechend zu 0,25 berechnet wird. Dies bedeutet, dass ein Viertel aller eingesetzten Diisocyanatmoleküle keinen Reaktionspartner findet und als freies monomeres Diisocyanat im Reaktionsprodukt übrigbleibt. Diese molaren Gegebenheiten können bei konkret bekannten Polyolen und Polyisocyanaten selbstverständlich leicht in Massenanteile umgerechnet werden.

Diisocyanate, die die Forderung nach gleicher Reaktivität zumindest sehr weitgehend erfüllen sind beispielsweise 4,4'-Diphenylmethandiisocyanat, Hexamethylendiisocyanat und trans-Cyclohexandiisocyanat.

Der Gehalt an freien monomeren Diisocyanaten in NCO-Prepolymeren wirkt sich insbesondere dann sehr störend aus, wenn diese leicht flüchtig sind, da NCO-Prepolymere meist bei erhöhter Temperatur gehandhabt werden müssen und es so zu unerwünschten Freisetzungen kommen kann, denen wiederum durch aufwendige technische Schutzvorkehrungen, z.B. Absauganlagen entgegengewirkt werden muss.

Für Toluylendiisocyanat (TDI) ist diesbezüglich, nicht zuletzt wegen gesetzlicher Vorgaben, ein Wert von 0,1 Gew.-% zu unterschreiten; ansonsten müssen die erwähnten Schutzmaßnahmen getroffen werden.

Aufgrund dieser Gegebenheiten sind nun in der Vergangenheit eine ganze Reihe von technischen Lösungen dieser Problematik bekannt geworden.

Unter anderem ist es daher naheliegend, bei den Diisocyanaten nur solche einzusetzen, die einen hohen Siedepunkt, d.h. eine niedrige Flüchtigkeit aufweisen. Ein Beispiel hierfür ist das 4,4'-Diphenylmethandiisocyanat (MDI). Grundsätzlich nachteilig an einer derartigen Vorgehensweise ist es jedoch, dass durch die Beschränkung auf hoch siedende Diisocyanate das potentielle Eigenschaftsspektrum der daraus hergestellten Polyurethane nicht voll ausgeschöpft wird. Des weiteren ist speziell bei MDI nachteilig, dass dessen Prepolymere vergleichsweise hohe Viskositäten aufweisen.

Selbstverständlich können auch Diisocyanate eingesetzt werden, deren NCO-Gruppen unterschiedlich reaktiv sind, beispielsweise das 2,4-Toluylendiisocyanat (2,4-TDI). In solchen Fällen kann die o.g. Berechnungsformel für das freie monomere Diisocyanat nicht mehr in reiner Form zum Einsatz gelangen, sondern muss um einen Faktor erweitert werden, der die unterschiedliche Reaktivität berücksichtigt. Im Endergebnis wird durch eine solche Maßnahme die Vorverlängerung unterdrückt oder zumindest vermindert, so dass demzufolge der Anteil an freiem monomeren Diisocyanat z.T. deutlich kleiner ausfällt als bei Diisocyanaten mit Isocyanatgruppen von gleicher Reaktivität.

Weiterhin steht aus technischer Sicht immer der Weg offen, dass man das Prepolymer mit bezogen auf die Polyolkomponente molar überschüssigem Diisocyanat herstellt und den Anteil an freiem monomeren Diisocyanat durch destillative Prozesse, etwa Kurzwegverdampfung oder Dünnschichtverdampfung oder beispielsweise auch durch Extraktionsverfahren auf den gewünschten Wert, im Falle des TDI z.B. unter 0,1 Gew.% absenkt. Grundsätzlich nachteilig ist jedoch der damit verbundene hohe technische Aufwand. Beispiele für derartige Vorgehensweisen sind in DE 42 32 015 A1, DE 41 40 660 A1 und DE 37 39 261 A1 beschrieben.

Neben der Wahl unterschiedlich reaktive NCO-Gruppen aufweisender Diisocyanate und der Option der nachträglichen Entfernung des freien monomeren Diisocyanats steht nach der o.g. Formel zur Berechnung des Anteils an freiem monomeren Diisocyanat selbstverständlich weiterhin der Parameter p, der den Umsatz an Isocyanatgruppen beschreibt, zur Verfügung, um Einfluss auf die Produktzusammensetzung zu nehmen. Wenn der Parameter p möglichst große Werte annimmt, wird der Anteil an freiem monomeren Diisocyanat insbesondere infolge des quadratischen Terms rasch kleiner. Dies bedeutet, dass insbesondere solche stöchiometrischen Verhältnisse in Frage kommen, bei denen p den Wert von 0,5 unterschreitet, d.h. dass das NCO-Prepolymere aus 1 Mol Diol und weniger als 2 Molen Diisocyanat aufgebaut ist. Durch eine solche Maßnahme entsteht selbstverständlich ein NCO-Prepolymer, das nun auch im Mittel Vorverlängerung aufweist. Hier ist selbstverständlich zu erwarten, dass die Viskosität durch einen derartigen Aufbau im Vergleich zu mit höherem NCO-Überschuss hergestellten Varianten ansteigt.

Aufgabe war es daher, ein Verfahren zur Verfügung zu stellen, das es gestattet, Prepolymere mit geringem Gehalt an freiem Toluylendiisocyanat und niedriger Viskosität herzustellen, ohne aufwendige Prozess-Schritte, wie Destillation etc. durchführen zu müssen.

Überraschenderweise ist es gelungen, Prepolymere mit Anteilen an freiem monomerem TDI von unter 0,1 Gew.-% und mit bei 50°C gemessenen Viskositäten von unterhalb 5000 mPas herzustellen. Diese Prepolymere sind für eine Kettenverlängerungsreaktion mit aromatischen aminischen Kettenverlängern sehr gut einsetzbar und ergeben Polyurethanelastomere mit guten mechanischen bzw. mechanisch-dynamischen Eigenschaften. Die Prepolymere müssen darüber hinaus keinem destillativen und/oder extraktiven Verfahrensschritt unterworfen werden.

Gegenstand der Erfindung ist daher ein Verfahren zur Herstellung von NCO-Prepolymeren auf Basis Toluylendiisocyanat mit einem Gehalt an freiem monomerem Toluylendiisocyanat von höchstens 0,1 Gew.-% und einer bei 50°C gemessenen Viskosität von höchstens 5000 mPas in einstufiger Fahrweise, dadurch gekennzeichnet, dass

(a) Polyetherpolyole mit mindestens 85% sekundären OH-Gruppen mit

(b) Toluylendiisocyanat mit einem Anteil an 2,4-Isomerem von mehr als 99,5 Gew.-% umgesetzt werden unter Einhaltung eines molaren Verhältnisses von Isocyanat- zu Hydroxylgruppen (Kennzahl) im Bereich von 1,52:1 bis 1,85:1und unter der Bedingung, dass die Kennzahl den durch die Formel (I)

$$\text{Kennzahl}_{max} = 1{,}5982 + 7\ /\ \text{Hydroxylzahl des Polyethers} \qquad (I)$$

definierten Wert nicht übersteigt,
bei Reaktionstemperaturen von 40 bis 95°C.

Bevorzugt weist das eingesetzte Toluylendiisocyanat Anteile an 2,4-Isomerem von mehr 99,6 Gew.%, besonders bevorzugt mehr als 99,7 Gew.-% auf.

Das Toluylendiisocyanat weist vorzugsweise Anteile an 2,4-Isomerem von mehr als 99,6 Gew.-%, besonders bevorzugt mehr als 99,7 Gew.-% auf.

Die eingesetzten Polyetherpolyole sind solche Verbindungen, die erhalten werden, indem man Starterpolyole, meist Starterdiole, z.B. 1,2-Propylenglykol, 1,4-Butandiol, sowie Wasser durch ringöffnende Polymerisation mit Ethylen- und/oder Propylenoxid umsetzt. Hierbei kann selbstverständlich sowohl die basenkatalysierte Variante, bei der starke anorganische Basen, wie z.B. Kaliumhydroxid als Katalysatoren verwendet werden, als auch die Doppelmetallkatalyse-Variante zum Einsatz kommen. Die verwendeten Polyetherpolyole umfassen auch Copolyether, bei denen mehr als ein durch ringöffnende Polymerisation polymerisierbares aliphatisches Epoxid eingesetzt wird, wobei sowohl ein blockweiser als auch ein statistischer Einbau der Epoxide möglich ist. Bevorzugt sind Polyether- und Copolyetherpolyole, die unter Verwendung von Ethylen- und Propylenoxid hergestellt werden und deren OH-Endgruppen zu mehr als 85% sekundär sind. Bevorzugt sind Polyetherpolyole, die mit bifunktionellen Startern, einschließlich Wasser hergestellt werden und die Hydroxylfunktionalitäten von mindestens 1,97 aufweisen. Selbstverständlich können auch Gemische aus mehr als einem Polyetherpolyol eingesetzt werden. Bevorzugt sind solche Polyetherpolyole, die Hydroxylzahlen von 25 bis 125 mg KOH/g aufweisen, und Gemische, deren Misch-Hydroxylzahl im Bereich von 25 bis 125 mg KOH/g liegt.

Die erfindungsgemäßen NCO-Prepolymere werden nur dann erhalten, wenn das verwendete Toluylendiisocyanat einen Anteil an 2,4-TDI von mehr als 99,5 Gew.-%, bevorzugt mehr als 99,6 Gew.-%, besonders bevorzugt mehr als 99,7 Gew.-% aufweist.

Die Kennzahl muss mit besonderer Sorgfalt eingehalten werden. Erfindungsgemäße NCO-Prepolymere werden erhalten, wenn die Kennzahl in Abhängigkeit von der OH-Zahl des Polyetherpolyols, die wiederum im Bereich von 25 bis 125 liegen muss, wie folgt eingestellt wird:

$$\text{Kennzahl}_{max} = 1{,}5982 + 7 \,/\, \text{Hydroxylzahl des Polyethers} \qquad (I)$$

Bei Überschreitung der maximalen Kennzahl werden NCO-Prepolymere erhalten, die mehr als 0,1 1 Gew-% freies monomeres TDI aufweisen, insbesondere dann, wenn die Prepolymersynthese am oberen Rand oder jenseits des Temperaturfensters ausgeführt wird. Nach unten sind der Kennzahl in der Theorie keine Grenzen gesetzt, jedoch muss berücksichtigt werden, dass mit zunehmender Unterschreitung der maximal möglichen Kennzahl zwar Monomer freie NCO-Prepolymere erhalten werden, die aber aufgrund ihrer stark erhöhten Viskosität nicht mehr verarbeitbar sind, d.h. nicht mehr mit einem Kettenverlängerer verrührt werden können. Dessen ungeachtet können solche Prepolymere für andere Anwendungen, z.B. in der Verwendung als feuchtigkeitshärtende, durch Rakeln aufzubringende Filme durchaus noch verwendbar sein. In einer Ausführungsform wird das Prepolymer auf die Oberfläche, z.B. einer Glasplatte, mit einer Rakel aufgetragen. Das Prepolymer kann auch durch Rotationsbeschichtung aufgebracht werden. Derartige gleichmäßig aufgebrachte NCO-Prepolymere werden danach gehärtet, vorzugsweise bei erhöhten Temperaturen durch die Feuchtigkeit aus der Luft.

Für die Anwendung in PUR-Elastomeren mit aminischen aromatischen Kettenverlängerern wird man daher vorzugsweise NCO-Prepolymere einsetzen, die die maximale Kennzahl um nicht mehr als 0,1 Kennzahleinheiten unterschreiten.

Das erfindungsgemäße Verfahren ist dadurch gekennzeichnet, dass es bei erhöhter Temperatur, bevorzugt im Temperaturbereich von 40 bis 95°C durchgeführt wird. Niedrige Temperaturen führen bei ansonsten gleicher Rezeptur zwar zu niedrigeren Gehalten an freiem monomerem TDI, aber auch zu deutlich längeren Reaktionszeiten, wohingegen höhere Temperaturen zwar die Reaktionszeit verkürzen, aber auch die Gehalte an freiem monomerem TDI ansteigen lassen. Besonders bevorzugt sind daher Reaktionstemperaturen von 55 bis 90°C.

Die Reaktion kann selbstverständlich unter erhöhtem oder vermindertem oder bei Normaldruck ausgeführt werden. Bevorzugt ist Normaldruck.

Weiterhin kann ein Katalysator verwendet werden.

Die Reaktion wird vorteilhaft unter Feuchtigkeitsausschluss durchgeführt, wobei in einer bevorzugten Ausführungsform ein inertes Schutzgas zu Überschleierung des Reaktionsgemisches eingesetzt wird. Bevorzugt wird hierzu Stickstoff verwendet.

Die erfindungsgemäßen NCO-Prepolymere können beispielsweise zur Herstellung von Polyurethan-Gießelastomeren verwendet werden, wobei hiefür aminische Kettenverlängerer zum Einsatz kommen. Aminische Kettenverlängerer sind beispielsweise 3,5-Diamino-4-chlorobenzoe-säureisobutylester, 3,5-Bis(methylthio)-2,4-diaminotoluol, 4,4'-Diamino-2,2'-dichloro-5,5'-diethyldiphenylmethan oder 2,4-Diamino-3,5-diethyltoluol.

Die Erfindung soll anhand der nachfolgend aufgeführten Beispiele näher erläutert werden.

**Beispiele**

**Rohstoffe:**

Polyether 1: Arcol® P 1000N der Fa. Bayer MaterialScience AG, Polypropylenoxidpolyol, OH-Zahl 112 mg KOH/g

Polyether 2: Acclaim® Polyether 2200N der Fa. Bayer MaterialScience AG, Polypropylenoxidpolyol, OH-Zahl 56 mg KOH/g

Polymeg 1000: $\alpha$-Hydro, $\omega$-hydroxy-polyoxytetramethylen der Fa. Lyondell mit OH-Zahl von 112 mg KOH/g

Polymeg 2000:    $\alpha$-Hydro, $\omega$-hydroxy-polyoxytetramethylen der Fa. Lyondell mit OH-Zahl von 56 mg KOH/g
2,4-TDI:    Desmodur® T100 der Fa. Bayer MaterialScience AG, NCO-Gehalt 48,3 Gew.-% und einer Isomerenreinheit von größer 99,6 Gew.%

3,5-Diamino-4-chlorobenzoesäureisobutylester: RC-Vernetzer Baytec® 1604 der Fa. Rheinchemie 3,5-Bis(methylthio)-2,4-diaminotoluol: Ethacure®300 der Fa. Rheinchemie 4,4'-Diamino-2,2'-dichloro-5,5'-dielhyldiphenylmethan (MCDEA): Lonzacure®MCDEA der Fa.
Lonza
2,4-Diamino-3,5-diethyltoluol (DETDA): Lonzacure® DETDA 80 der Fa. Lonza Ölsäure: cis-Octadec-9-ensäure, CAS 112-80-1 der Fa. Aldrich, Aktivator Tinuvin® B75: Tinuvin® B75 der Fa. Ciba

**Beispiel 1: (Herstellung eines erfindungsgemäßen NCO-Prepolymers)**

In auf 77°C erwärmte 591,6 g (3,4 Mol) Desmodur® T100 wurden unter Stickstoff im Verlauf von einer Stunde 4000 g (2 Mol) des Polyethers 2 so eingerührt, dass die Reaktionstemperatur 80°C zu keinem Zeitpunkt überstieg. Nach beendeter Zugabe wurde für weitere 10 Stunden bei 80°C gerührt und ab diesem Zeitpunkt im Abstand von 60 Minuten den NCO-Wert bestimmt. Die Reaktion wurde nach 13 Stunden zu dem Zeitpunkt abgebrochen, als der experimentell bestimmte NCO-Wert den theoretischen Wert von 2,52 Gew.-% NCO unterschritt. Der Anteil an freiem TDI wurde durch HPLC (High **P**erformance **L**iquid **C**hromatography, **H**ochleistungsflüssigkeit-Chromatographie) zu 0,042 Gew.-% bestimmt; die Viskosität betrug 1500 mPas bei 50°C.

**Beipiele 2-5: (erfindungsgemäß)**

Die NCO-Prepolymere wurden entsprechend Beispiel 1 hergestellt. Die Parameter sind Tabelle 1 zu entnehmen.

**Tabelle 1:** Synthese und Charakterisierung der TDI-Prepolymere

| **Beispiele** | | | **1** | **2** | **3** | **4** | **5** |
|---|---|---|---|---|---|---|---|
| Polyether 2 | | | X | X | X | - | - |
| Polyether 1 | | | -- | X | X | X | X |
| OH-Zahl Polyol(gemisch) | | [mgKOH/g] | 56 | 70 | 81 | 112 | 112 |
| Reaktionstemperatur | | [°C] | 80 | 75 | 75 | 70 | 75 |
| Kennzahl | | [NCO/OH] | 1,70 | 1,65 | 1,65 | 1,60 | 1,65 |
| Kennzahl$_{max}$. nach Formel (I) | | [NCO/OH] | 1,72 | 1,70 | 1,68 | 1,66 | 1,66 |
| NCO-Wert | (theor.) | [Gew.%] | 2,52 | 3 | 3,28 | 3,87 | 4,13 |
| | (exp.) | [Gew.%] | 2,42 | 2,97 | 3,15 | 3,71 | 4,02 |
| | | | | | | | |
| Gehalt an freiem TDI | 2,4-TDI | [%] | 0,023 | 0,008 | 0,009 | 0,001 | 0,020 |
| | 2,6-TDI | [%] | 0,019 | 0,022 | 0,022 | 0,019 | 0,031 |
| | Summe | [%] | 0,042 | 0,03 | 0,031 | 0,020 | 0,051 |
| | | | | | | | |
| Viskosität | bei 50°C | [mPas] | 1500 | 2200 | 2700 | 4300 | 3600 |
| | bei 60°C | [mPas] | n.b.*) | 1200 | 1440 | 2100 | 1750 |
| *): n.b.: nicht bestimmt | | | | | | | |

Die OH-Zahl der eingesetzten Polyether wurde im Bereich von 56 bis 112 durch Abmischen von Polyether 1 und 2 variiert. Die Variation der OH-Zahl hatte zur Folge, dass die NCO-Werte der Prepolymeren einen Bereich zwischen ca. 2,5 und ca. 4,1 Gew.-% NCO abdecken. Die Reaktionstemperaturen und das Verhältnis von NCO/OH-Gruppen (Kennzahl) wurde entsprechend der OH-Zahl angepasst. Höhere OH-Zahlen erfordern tendenziell eine niedrigere Reaktionstemperatur und ein niedrigeres Verhältnis von NCO-/OH-Gruppen.

Der Gehalt an freiem TDI war in allen Fällen deutlich unterhalb 0,1 Gew.-%.

Insgesamt lagen die Viskositätswerte in einem Bereich, der eine gute Weiterverarbeitbarkeit bei 50 bis 60°C erlaubt.

Weiterhin zeigt der Vergleich der Beispiele 4 und 5, dass sich eine Abweichung von der durch die Formel (I) empfohlenen Kennzahl von 1,66 auf die Viskosität(Verwendbarkeit) auswirkt. Beispiel 5 mit einer Kennzahl von 1,65 weist einem Viskositätswert von 3600 mPas (50°C) auf, während Beispiel 4 mit einer Kennzahl von 1,60 bei ansonsten gleicher Rezeptur und trotz schonender Herstellung (70°C anstatt 75°C) bereits eine Viskosität von 4300 mPas (50°C) aufweist.

**Beispiele 6 - 9: (nicht erfindungsgemäß)**

Die NCO-Prepolymere wurden entsprechend Beispiel 1 hergestellt. Die Verfahrensparameter sind Tabelle 2 zu entnehmen.

**Tabelle 2:** Synthese und Charakterisierung der nicht erfindungsgemäßen TDI-Prepolymere

| Beispiele | | | 6V | 7V | 8V | 9V | |
|---|---|---|---|---|---|---|---|
| Polyether 2 | | | X | X | X | X | |
| 2,4-TDI | | [Gew.%] | 99,8 | 99,8 | 99,8 | 80 | |
| 2,6-TDI | | [Gew.%] | 0,2 | 0,2 | 0,2 | 20 | |
| OH-Zahl Polyol(gemisch) | | [mgKOH/g] | 56 | 56 | 56 | 56 | |
| Kennzahl | | [NCO/OH] | 1,90 | 1,80 | 1,75 | 1,80 | |
| Kennzahl Nach Formel (I) | | [NCO/OH] | 1,72 | 1,72 | 1,72 | 1,72 | |
| Reaktionstemperatur | | [°C] | 60 | 80 | 80 | 80 | |
| NCO-Wert | (theor.) | [Gew.%] | 3,24 | 2,90 | 2,73 | 2,90 | |
| | (exp.) | [Gew.%] | 3,15 | 2,88 | 2,69 | 2,82 | |
| Gehalt an freiem TDI | 2,4-TDI | [%] | n.b.*) | n.b.*) | n.b.*) | 0,016 | |
| | 2,6-TDI | [%] | n.b.*) | n.b.*) | n.b.*) | 0,81 | |
| | Summe | [%] | 0,32 | 0,18 | 0,12 | 0,826 | |
| *): n.b.: nicht bestimmt | | | | | | | |

Die Kennzahlen der 4 Beispiele aus Tabelle 2 liegen über der max. Kennzahl gemäß Formel (I). Die Annäherung an die empfohlene max. Kennzahl in der Reihe 6V, 7V, 8V führt, wie die Tabelle zeigt, zu einer Annäherung an den kritischen Gehalt an freiem monomerem TDI von 0,10 Gew.-%. Beispiel 9V entspricht bezüglich der Zusammensetzung des TDIs nicht der Erfindung, da es nur 80 Gew.-% 2,4-Isomeres aufweist. Das Prepolymere ist bezüglich seines Anteils an freiem TDI mit 0,826 das bei weitem Schlechteste.

**Beispiele 10 und 11: (nicht erfindungsgemäß)**

Die NCO-Prepolymere wurden entsprechend Beispiel 1 hergestellt. Die Verfahrensparameter sind Tabelle 3 zu entnehmen.

**Tabelle 3:** Synthese und Charakterisierung nicht erfindungsgemäßer TDI-Prepolymerer

| Beispiele | | | 10V | 11V | |
|---|---|---|---|---|---|
| Polyether-Typ | | | Polymeg 2000 | Polymeg 1000 | |
| 2,4-TDI | | [Gew.%] | 99,8 | 99,8 | |
| 2,6-TDI | | [Gew.%] | 0,2 | 0,2 | |
| OH-Zahl Polyol(gemisch) | | [mgKOH/g] | 56 | 112 | |
| Kennzahl | | [NCO/OH] | 1,70 | 1,64 | |

(fortgesetzt)

| Beispiele | | | 10V | 11V | |
|---|---|---|---|---|---|
| Kennzahl$_{max}$. nach Formel (I) | | [NCO/OH] | 1,72 | 1,66 | |
| Reaktionstemperatur | | [°C] | 80 | 80 | |
| NCO-Wert | (theor.) | [Gew.%] | 4,24 | 2,56 | |
| | (exp.) | [Gew.%] | 3,86 | 2,50 | |
| Gehalt an freiem TDI | | [%] | < 0,02 | < 0,02 | |
| Viskosität | bei 50°C | [mPas] | 7340 | 5350 | |
| *): n.b.: nicht bestimmt | | | | | |

Die Beispiele der Tabelle 3 zeigen, dass es zwar durchaus auch möglich ist, unter der max. Kennzahl mit Polyolen zu liegen, die nur primäre OH-Gruppen aufweisen (Polymeg 1000 und 2000), und dabei NCO-Prepolymere zu erhalten, die bezüglich ihres Gehaltes an freiem TDI ebenfalls den Wert von 0,1 Gew.-% unterschreiten, die aber hinsichtlich ihrer Viskosität (Verarbeitbarkeit) deutlich schlechter sind als die analogen Prepolymere auf Basis von Polyolen mit überwiegend sekundären OH-Gruppen. Der direkte Vergleich von Beispiel 10V mit Beispiel 1 und Beispiel 11 V mit Beispiel 5 macht die Unterschiede deutlich.

**Beispiele E1 bis E8: Herstellung von Gießelastomeren aus erfindungsgemäßen NCO-Prepolymeren**

Die Herstellung der Gießelastomere erfolgte in an sich bekannter Weise dadurch, dass die erfindungsgemäßen Prepolymere auf ca. 55°C erwärmt und zunächst durch Anlegen eines Vakuums entgast wurden. Danach wurde der Kettenverlängerer in geschmolzenem Zustand homogen eingerührt und die reagierende Schmelze in auf ca. 100°C vorgewärmte Formen gegossen. Man entformte nach ca. 30 Minuten und temperte die Formkörper für ca. 24 Stunden bei 110°C nach. Anschließend wurden die mechanischen Eigenschaften bestimmt (siehe Tabelle 4).

**Tabelle 4:** Synthese und Eigenschaften der Gießelastomere E1 bis E8

| Beispiel | | | E1 | E2 | E3 | E4 | E5 | E6 | E7 | E8 |
|---|---|---|---|---|---|---|---|---|---|---|
| **Formulierung** | | | | | | | | | | |
| Prep. aus Bsp. 1 | | [Gew.-Teile] | | | | | 100 | 100 | 100 | 100 |
| Prep. aus Bsp. 5 | | [Gew.-Teile] | 100 | 100 | 100 | 100 | | | | |
| MCDEA | | [Gew.-Teile] | 17,24 | | | | 10,39 | | | |
| Baytec® 1604 | | [Gew.-Teile] | | 10,55 | | | | 6,35 | | |
| Ethacure® 300 | | [Gew.-Teilel] | | | 9,8 | | | | 5,89 | |
| DETDA | | [Gew.-Teile] | | | | 8,11 | | | | 4,88 |
| Tinuvin® B75 | | [Gew.-Teile] | | | | | 0,5 | | | 0,5 |
| Ölsäure | | [Gew.-Teile] | | 0,5 | | | | 0,5 | | |
| **Verarbeitung** | | | | | | | | | | |
| Kennzahl | | | 1,05 | 1,10 | 1,05 | 1,05 | 1,05 | 1,10 | 1,05 | 1,05 |
| NCO-Wert | | [Gew.-%] | 4,02 | 4,02 | 4,02 | 4,02 | 2,42 | 2,42 | 2,42 | 2,42 |
| Viskosität 70°C | | [mpas] | 1096 | 1096 | 1096 | 1096 | 847 | 847 | 847 | 847 |
| Prepolymertemperatur | | [°C] | 60 | 60 | 60 | 60 | 50 | 50 | 50 | 50 |
| Vernetzertemperatur | | [°C] | 110 | 90 | 23 | 23 | 110 | 90 | 23 | 23 |
| Gießzeit | | [s] | 240 | 150 | 240 | 40 | 450 | 600 | 600 | 60 |
| Nachheiztemperatur | | [°C] | 110 | 110 | 110 | 110 | 110 | 110 | 110 | 110 |
| Nachheizzeit [h] | | | 24 | 24 | 24 | 24 | 24 | 24 | 24 | 24 |
| **Mechanische Eigenschaften** | | | | | | | | | | |
| | DIN | | | | | | | | | |
| Härte | 53505 | [Shore A] | 93 | 92 | 83 | 87 | 79 | 79 | 63 | 73 |
| Härte | 53505 | [Shore D] | 39 | 35 | 26 | 30 | 25 | 25 | 16 | 21 |
| Spannung 50% | 53504 | [MPa] | 8,61 | 6,86 | 4,3 | 4,62 | 3,59 | 3,38 | 1,92 | 2,25 |

(fortgesetzt)

| Mechanische Eigenschaften | | | | | | | | | | |
|---|---|---|---|---|---|---|---|---|---|---|
| Spannung 100% | 53504 | [MPa] | 9,6 | 7,8 | 5,5 | 5,5 | 5,0 | 4,3 | 2,6 | 2,9 |
| Spannung 300% | 53504 | [MPa] | 12,8 | 8,8 | 7,3 | 7,6 | 5,8 | 5,5 | 3,9 | 3,8 |
| Reißspannung | 53504 | [MPa] | 28,9 | 24,2 | 16,8 | 23,1 | 14,9 | 7,9 | 9,3 | 10,5 |
| Reißdehnung | 53504 | (%) | 462 | 622 | 655 | 561 | 878 | 556 | 931 | 913 |
| Graves | 53515 | [kN/m] | 42,77 | 45,7 | 45,06 | 34,46 | 25 | 20 | 17 | 23 |
| Stoßelastizität | 53512 | [%] | 43 | 44 | 39 | 49 | 65 | 70 | 61 | 67 |
| Abrieb | 53516 | [mm$^3$] | 63 | 77 | 124 | 80 | 98 | 104 | 168 | 111 |
| Dichte | 53420 | [g/mm$^3$] | 1,108 | 1,109 | 1,108 | 1,089 | 1,065 | 1,062 | 1,063 | 1,051 |
| DVR 22°C | 53517 | [%] | 20 | 31 | 35 | 44 | 16 | 13 | 33 | 50 |
| DVR 70°C | 53517 | [%] | 47 | 66 | 78 | 72 | 41 | 34 | 77 | 89 |

Tabelle 4 zeigt, dass die erfindungsgemäßen NCO-Prepolymere problemlos (d.h. bei niedriger Viskosität des Prepolymeren, bei ausreichender Gießzeit und Verarbeitungstemperatur) mit aminischen Kettenverlängeren zu Gießelastomeren verarbeitbar sind, wobei je nach Wahl des Prepolymeren und des Kettenverlängeres Elastomere im Härtebereich von ca. 60 bis 95 Shore A erhalten werden können. Dementsprechend variieren auch die übrigen mechanischen Eigenschaften. Harte Systeme weisen die von anderen Gießelastomeren her bekannten hohen Werte z.B. bzgl. Reißspannung auf, weichere Typen besitzen dagegen hohe Werte bzgl. ihrer Reißdehnung. Insgesamt kann das gesamte Eigenschaftsspektrum, welches für PUR-Gießelastomere im Markt etabliert ist, mit Gießelastomeren basierend auf den erfindungsgemäßen TDI-Prepolymeren gut abgedeckt werden.

Auch bei solchen Kettenverlängerern wie z.B. DETDA, die im Handgießverfahren normalerweise nicht verarbeitet werden können, ist das Handgießverfahren durchführbar. Dies ist die Folge des niedrigen Anteils an freiem TDI in den erfindungsgemäßen NCO-Prepolymeren.

**Patentansprüche**

1.  Verfahren zur Herstellung von NCO-Prepolymeren auf Basis Toluylendiisocyanat mit einem Gehalt an freiem monomerem Toluylendiisocyanat von höchstens 0,1 Gew.-% und einer bei 50°C gemessenen Viskosität von höchstens 5000 mPas in einstufiger Fahrweise, **dadurch gekennzeichnet, dass**

    (a) Polyetherpolyole mit mindestens 85% sekundären OH-Gruppen mit
    (b) Toluylendiisocyanat mit einem Anteil an 2,4-Isomerem von mehr als 99,5 Gew.-% umgesetzt werden unter Einhaltung eines molaren Verhältnisses von Isocyanat- zu Hydroxylgruppen (Kennzahl) im Bereich von 1,52: 1 bis 1,85:1 und unter der Bedingung, dass die Kennzahl den durch die Formel (I)

$$\text{Kennzahl}_{max} = 1{,}5982 + 7\,/\,\text{Hydroxylzahl des Polyethers} \qquad \text{(I)}$$

    definierten Wert nicht übersteigt,
    bei Reaktionstemperaturen von 40 bis 95°C.

2.  Verwendung der nach Anspruch 1 erhaltenen NCO-Prepolymere zur Herstellung von Polyurethangießelastomeren durch Umsetzung der NCO-Prepolymere mit aromatischen aminischen Kettenverlängerern.

3.  Verwendung gemäß Anspruch 2, wobei als aromatische aminische Kettenverlängerer, 3,5-Diamino-4-chlorobenzoesäureisobutylester, 3,5-Bis(methylthio)-2,4-diaminotoluol, 4,4'-Diamino-2,2'-dichloro-5,5'-diethyldiphenylmethan und 2,4-Diamino-3,5-diethyltoluol sowie dessen Isomere eingesetzt werden.

4.  Verwendung der nach Anspruch 1 erhaltenen NCO-Prepolymere zur Aushärtung mit Luftfeuchtigkeit.

5.  Verwendung der nach Anspruch 1 erhaltenen NCO-Prepolymere zur Herstellung von geschäumten und nicht geschäumten Polyurethanen.

**Claims**

1.  Process for preparing NCO prepolymers based on tolylene diisocyanate, having a free monomeric tolylene diisocyanate content of not more than 0.1% by weight and a viscosity, measured at 50°C, of not more than 5000 mPas, in single-stage mode,
    **characterized in that**

    (a) polyether polyols having at least 85% of secondary OH groups are reacted with
    (b) tolylene diisocyanate having a 2,4-isomer fraction of more than 99.5% by weight, while maintaining a molar ratio of isocyanate groups to hydroxyl groups (index) in the range from 1.52:1 to 1.85:1, and under the condition that the index does not exceed the value defined by the formula (I)

$$\mathrm{index_{max} = 1.5982 + 7/hydroxyl\ number\ of\ the}$$
$$\mathrm{polyether\ (I)}$$

at reaction temperatures from 40 to 95°C.

**2.** Use of the NCO prepolymers obtained according to Claim 1 for producing polyurethane casting elastomers, by reaction of the NCO prepolymers with aromatic aminic chain extenders.

**3.** Use according to Claim 2, where aromatic aminic chain extenders used are isobutyl 3,5-diamino-4-chlorobenzoate, 3,5-bis(methylthio)-2,4-diamino-toluene, 4,4'-diamino-2,2'-dichloro-5,5'-diethyl-diphenylmethane and 2,4-diamino-3,5-diethyltoluene and its isomers.

**4.** Use of the NCO prepolymers obtained according to Claim 1 for curing with atmospheric moisture.

**5.** Use of the NCO prepolymers obtained according to Claim 1 for producing foamed and non-foamed polyurethanes.

**Revendications**

**1.** Procédé de production de prépolymères NCO à base de diisocyanate de toluylène avec une teneur en diisocyanate de toluylène monomère libre de maximum 0,1 % en poids et une viscosité mesurée à 50°C de maximum 5000 mPas en marche à une étape, **caractérisé en ce que** l'on convertit

(a) des polyols de polyéther avec au moins 85 % de groupes OH avec
(b) du diisocyanate de toluylène avec une proportion de 2,4-isomères de plus de 99,5 % en poids

en respectant un rapport molaire des groupes isocyanate aux groupes hydroxyle (nombre) dans la plage de 1,52: 1 à 1,85:1 et sous la condition que le nombre ne dépasse pas la valeur définie par la formule (I)

$$\mathrm{nombre_{max} = 1,5982 + 7/nombre\ d'hydroxyles\ du\ polyéther\ (I)}$$

à des températures de réaction de 40 à 95°C.

**2.** Utilisation des prépolymères NCO obtenus selon la revendication 1 pour la production d'élastomères fluides de polyuréthane par conversion des prépolymères NCO avec des extenseurs de chaîne aminés aromatiques.

**3.** Utilisation selon la revendication 2, dans laquelle on utilise comme extenseurs de chaîne aminés aromatiques de l'isobutylester d'acide 3,5-diamino-4-chlorobenzoïque, du 3,5-bis(méthylthio)-2,4-diamino-toluène, du 4,4'-diamino-2,2'-dichloro-5,5'-diéthyl-diphénylméthane et du 2,4-diamino-3,5-diéthyltoluène ainsi que leurs isomères.

**4.** Utilisation des prépolymères NCO obtenus selon la revendication 1 pour le durcissement avec l'humidité de l'air.

**5.** Utilisation des prépolymères NCO obtenus selon la revendication 1 pour la production de polyuréthanes expansés et non expansés.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4232015 A1
- DE 4140660 A1
- DE 3739261 A1